# EUROPÄISCHE PATENTSCHRIFT

(11) **EP 1 241 336 B1**
(45) Veröffentlichungstag und Bekanntmachung des Hinweises auf die Patenterteilung: **06.09.2006**
(21) Anmeldenummer: 02090053.6
(22) Anmeldetag: 13.02.2002
(51) Int. Cl.: F02D 21/08, F02M 25/07, F02D 35/00, F02D 41/32

(54) **Verfahren und Vorrichtung zur Regelung einer externen Abgasrückführrate**
Method and device for regulating an external exhaust gas recirculation rate
Procédé et dispositif pour régler le débit du gaz d'échappement recirculé

(30) Priorität: 15.03.2001 DE 10114049
(43) Veröffentlichungstag der Anmeldung: 18.09.2002
(73) Patentinhaber: Volkswagen AG, 38436 Wolfsburg (DE)
(72) Erfinder: Ebus, Feitse, 38446 Wolfsburg (DE); Stiebels, Bernd Dr., 38528 Adenbüttel (DE)
(74) Vertreter: Schneider, Henry

(56) Entgegenhaltungen:
- EP-A- 0 460 728
- US-A- 4 454 853
- US-A- 5 611 309
- US-A- 5 738 126
- PATENT ABSTRACTS OF JAPAN vol. 2000, no. 09, 13. Oktober 2000 (2000-10-13) & JP 2000 170588 A (MAZDA MOTOR CORP), 20. Juni 2000 (2000-06-20)

## Beschreibung

Die Erfindung betrifft ein Verfahren sowie eine Vorrichtung zur Regelung einer externen Abgasrückführrate magerlauffähiger Verbrennungskraftmaschinen.

Moderne Konzepte zur Steuerung von Verbrennungskraftmaschinen streben über möglichst weite Lastbereiche einen Betrieb im so genannten Magermodus an, in dem die Verbrennungskraftmaschine mit einem kraftstoffarmen Luft-Kraftstoff-Verhältnis mit λ > 1 betrieben wird. Der Vorteil dieser Betriebsart liegt in einem niedrigen Kraftstoffverbrauch, verbunden mit einer geringen Schadstoffemission. Dieser Verbrauchsvorteil kann besonders bei Ottomotoren mit Direkteinspritzung ausgebaut werden, die im so genannten Schichtladebetrieb gefahren werden können. Dabei wird durch eine späte Einspritzung in den Verdichtungshub lediglich im Bereich der Zündkerze ein brennbares Gemisch erzeugt, während im restlichen Brennraum nahezu reine Luft vorliegt. Auf diese Weise lassen sich sehr hohe verbrauchsgünstige Luftverhältnisse mit λ =1,5 bis 4 darstellen. In Betriebssituationen mit hohen Lasten und Drehzahlen lässt sich die Darstellung des Schichtladebetriebs aufgrund einer größeren erforderlichen Kraftstoffmenge beziehungsweise einer kürzer werdenden Zeit für die Gemischaufbereitung nicht realisieren. Um dennoch in diesem Last- beziehungsweise Drehzahlbereich Verbrauchsvorteile erzielen zu können, wird der so genannte homogene Magerbetrieb eingesetzt, bei dem durch eine frühe Einspritzung in den Ansaughub ein homogenes Gemisch zum Zündzeitpunkt erzeugt wird. Das Luft-Kraftstoff-Verhältnis im mageren Homogenbetrieb wird üblicherweise auf Lambdawerte zwischen 1,3 und 1,6 eingestellt. Hierdurch ergibt sich gegenüber dem homogenen λ=1-Betrieb konventioneller Verbrennungskraftmaschinen ein Verbrauchsvorteil von bis zu 12 %. Für nicht schichtladefähige Ottomotoren ohne Direkteinspritzung liegt die obere zulässige Magergrenze ebenfalls in diesem Bereich.

Trotz der insgesamt niedrigen Schadstoffemission im geschichteten oder homogenen Magerbetrieb stellen Stickoxide (NO_{X}) des Abgases ein Problem dar, da diese an herkömmlichen 3-Wege-Katalysator-Systemen bei Sauerstoffüberschuss nicht vollständig konvertiert werden können. Die NO_{X}-Rohemission der Verbrennungskraftmaschine zeigt etwa bei λ = 1,1 ein Maximum und betrifft somit insbesondere den homogenen Magerbetrieb. Zur Abhilfe ist bekannt, NO_{X}-Speicherkatalysatoren einzusetzen, die in der Lage sind, NO_{X} im mageren Abgas zu absorbieren. Aufgrund einer begrenzten NO_{X-}Speicherkapazität von NO_{X}-Speicherkatalysatoren werden in regelmäßigen Abständen Regenerationen durchgeführt, bei denen der Katalysator mit einer fetten Abgasatmosphäre mit λ < 1 beaufschlagt wird. Durch diese Maßnahme wird jedoch ein Teil des durch den Magerbetrieb erzielten Verbrauchsvorteils aufgezehrt.

Um die NO_{X}-Rohemission magerlauffähiger Verbrennungskraftmaschinen zu senken und somit die Regenerationsintervalle von NO_{X}-Speicherkatalysatoren zu verlängern, ist bekannt, eine externe Abgasrückführung (AGR) durchzuführen. Dabei wird ein Teil des Abgases entnommen, über eine Abgasrückführleitung in ein Saugrohr eingespeist und somit der Verbrennungskraftmaschine erneut zugeführt. Auf diese Weise wird die Verbrennungstemperatur gesenkt und die NO_{X}-Rohemission reduziert. Eine direkte Messung einer AGR-Rate ist derzeit nicht möglich. Üblicherweise wird die AGR-Rate daher gesteuert, indem abhängig von einem aktuellen Betriebspunkt der Verbrennungskraftmaschine, wie Motorlast oder Drehzahl, eine Soll-AGR-Rate ermittelt wird und diese über eine Öffnung eines in der Abgasrückführleitung angeordneten Abgasrückführventils eingestellt wird. Dieses Verfahren ist jedoch mit zahlreichen Fehlerquellen behaftet und ermöglicht keine exakte Einstellung einer vorgegebenen AGR-Rate. Auf der anderen Seite führen aber gerade im homogenen Magerbetrieb bei Lambdawerten < 1,6 bereits geringe Abweichungen der AGR-Rate zu empfindlichen Schwankungen der NO_{X}-Emission und auch einer Laufruhe. Ähnliches gilt für Fehler im eingestellten Luft-Kraftstoff-Verhältnis.

Aus US 5,738,126 ist ein Verfahren zur Steuerung eines Dieselmotors bekannt, der mit einer Abgasrückführung und einem Turbolader ausgestattet ist. Die Steuerung der AGR erfolgt in Abhängigkeit eines Sollwertes des Frischluftmassenstroms. Dieser wiederum wird in Abhängigkeit von der Drehzahl, der Motorlast bzw. der Einspritzmenge, der Kühlmitteltemperatur, der Ladelufttemperatur sowie des Atmosphärendrucks vorgegeben. Dabei ist der angesaugte Frischluftmassenstrom stromauf einer Frischluftdosiereinrichtung (Drosselklappe) und des Abgasturboladers die eigentliche Regelgröße. Ein Korrektiv der AGR-Rate erfolgt hingegen nicht.

US 5,611,309 beschreibt eine Regelung eines AGR-Ventils, indem ein Ansteuersignal für das AGR-Ventil in Abhängigkeit des Saugrohrdrucks und der Motordrehzahl vorgegeben und ein tatsächlich anliegender Steuerwert mit einem Sensor gemessen und an den vorgegebenen Steuerwert angepasst wird. Somit versucht US 5,611,309 eine möglichst genaue Einstellung der AGR-Rate zu gewährleisten, indem das Ansteuersignal für das AGR-Ventil in einem geschlossenen Regelkreis durch Sensorerfassung der Ventilöffnung geregelt wird. Auf diese Weise wird jedoch nicht berücksichtigt, dass beispielsweise Bautoleranzen üblicher AGR-Ventile zu unterschiedlichen Öffnungsquerschnitten und damit abweichenden AGR-Raten auch bei identischer Ansteuerung führen. Zudem ist die Erfassung der AGR-Ventilstellung durch den zusätzlichen Sensor mit zusätzlichen Bau- und Regelungskosten verbunden.

Aufgabe der vorliegenden Erfindung ist es daher, ein Verfahren und eine Vorrichtung zur Regelung einer Abgasrückführrate zur Verfügung zu stellen, welche hinsichtlich einer Einhaltung einer NO_{X}-Rohemission und einer Laufruhe unempfindlich sind. Das Verfahren sollte ferner mit einfachen konstruktiven Mitteln realisierbar sein und sich leicht in eine bestehende Motorsteuerung integrieren lassen.

Diese Aufgabe wird durch ein Verfahren sowie durch eine Vorrichtung mit den Merkmalen der unabhängigen Ansprüche 1 und 12 gelöst. Erfindungsgemäß ist vorgesehen, dass die Abgasrückführrate in Anhängigkeit eines in einem Saugrohr der Verbrennungskraftmaschine stromab einer Frischluftdosiereinrichtung erfassten Ist-Saugrohrdruckes derart angepasst wird, dass der sich in dem Saugrohr einstellende Ist-Saugrohrdruck einem vorgegebenen Soll-Saugrohrdruck angeglichen wird.

Im Unterschied zu bekannten Verfahren, in denen die Abgasrückführrate und das der Verbrennungskraftmaschine zugeführte Luft-Kraftstoff-Gemisch in Abhängigkeit von einem im Abgas gemessenen Lambdawert geregelt werden, erfolgt erfindungsgemäß die Regelung dieser Größen in Abhängigkeit des Saugrohrdruckes, welcher somit die eigentliche Regelgröße dargestellt. Es wurde nämlich gefunden, dass Abweichungen der Abgasrückführrate von entsprechenden Vorgaben hinsichtlich einer NO_{X}-Emission sowie einer Laufruhe der Verbrennungskraftmaschine unkritisch sind, solange ein konstanter Saugrohrdruck vorliegt. Dieses Prinzip wird anhand von Ausführungsbeispielen noch näher erläutert.

Die Regelung der Abgasrückführrate kann in bekannter Weise durch Ansteuern eines in einer Abgasrückführleitung angeordneten Stellmittels, welches vorzugsweise ein Abgasrückführventil ist, erfolgen. Dabei ist bevorzugt vorgesehen, initial oder im dynamischen Betrieb der Verbrennungskraftmaschine eine Vorsteuerung einer vorgegebenen Soll-Abgasrückführrate anhand abgespeicherter Kennfelder durchzuführen, welche eine Korrelation einer Stellgröße des Stellmittels mit der Abgasrückführrate vornehmen. Dabei wird etwa eine Öffnung des AGR-Ventils einer konkreten Abgasrückführrate zugeordnet.

Zusätzlich zur AGR-Rate kann eine Regelung eines der Verbrennungskraftmaschine zugeführten Luft-Kraftstoff-Verhältnisses ebenfalls erfolgen, indem in Anhängigkeit eines in einem Saugrohr der Verbrennungskraftmaschine stromab einer Frischluftdosiereinrichtung erfassten Ist-Saugrohrdruckes derart angepasst wird, dass der sich in dem Saugrohr einstellende Ist-Saugrohrdruck einem vorgegebenen Soll-Saugrohrdruck angeglichen wird. Dabei erfolgt die Regelung des Luft-Kraftstoff-Verhältnisses in Abhängigkeit einer Motorlast, die etwa aus einem Pedalwertgeber (PWG) abgeleitet werden kann, über Ansteuerung einer Kraftstoffzumesseinrichtung, beispielsweise eines Einspritz- oder Vergasersystems, und/oder Ansteuerung einer Frischluftdosiereinrichtung, etwa einer im Saugrohr angeordneten Drosselklappe. Auch hier erfolgt vorteilhaft eine Vorsteuerung anhand von gespeicherten Kennfeldern, welche eine Stellgröße der Kraftstoffzumesseinrichtung, beispielsweise eine Öffnungsdauer eines Einspritzventils, mit der zugeführten Kraftstoffmenge und/oder eine Stellgröße der Frischluftdosiereinrichtung, insbesondere eine Drosselklappenstellung, mittels eines Saugrohrmodells mit der Frischluftmenge korrelieren. Die Frischluftmenge kann beispielsweise über einen Luftmassenmesser erfasst oder berechnet werden.

Die Vorgaben des Soll-Saugrohrdruckes und/oder der Soll-Abgasrückführrate und/oder des Soll-Luft-Kraftstoff-Verhältnisses erfolgen vorzugsweise in Abhängigkeit von ausgewählten Betriebsparametern der Verbrennungskraftmaschine, insbesondere von einer Motorlast, einer Drehzahl, einem Pedalwertgeber oder einer Drosselklappenstellung.

Die Erfassung des Ist-Saugrohrdruckes kann in einfacher Weise mittels eines in dem Saugrohr angeordneten Drucksensors erfolgen. Derartige Sensoren sind in heutigen Fahrzeugen ohnehin häufig für verschiedene Applikationen vorhanden, so dass es für die Umsetzung des Verfahrens praktisch keinerlei konstruktiven Mehraufwands bedarf.

Es kann ferner vorteilhaft vorgesehen sein, eine zusätzliche Überwachung des Luft-Kraftstoff-Verhältnisses in Abhängigkeit eines Signals vorzunehmen, welches von einem in einem Abgaskanal angeordneten Gassensor, beispielsweise einer Lambdasonde oder eines NO_{X}-Sensors, ausgegeben wird.

Eine zur Durchführung des Verfahrens geeignete Vorrichtung umfasst neben der in dem Saugrohr angeordneten Druckmesseinrichtung Mittel, mit denen die Abgasrückführrate in Abhängigkeit des erfassten Ist-Saugrohrdruckes derart anpassbar ist, dass der sich in dem Saugrohr einstellende Ist-Saugrohrdruck sich einem vorgegebenen Soll-Saugrohrdruck angleicht. Diese Mittel umfassen vorzugsweise eine Steuereinheit, in der der Algorithmus zur Regelung der Abgasrückführrate in digitaler Form hinterlegt ist. Die Steuereinheit kann besonders vorteilhaft in ein Motorsteuergerät integriert sein.

Weitere vorteilhafte Ausgestaltungen der Erfindung ergeben sich aus den übrigen Unteransprüchen.

Die Erfindung wird nachfolgend in Ausführungsbeispielen anhand der zugehörigen Zeichnungen näher erläutert. Es zeigen:
- Figur 1: Isokennlinien eines relativen Kraftstoffverbrauchs in Abhängigkeit von einer Abgasrückführrate (AGR-Rate) und von einem Luft-Kraftstoff-Verhältnis (Lambda);
- Figur 2: Isokennlinien einer NO_{X}-Rohemission in Abhängigkeit von der AGR-Rate und Lambda;
- Figur 3: Isokennlinien einer Laufruhe in Abhängigkeit von der AGR-Rate und Lambda;
- Figur 4: Isokennlinien eines Saugrohrdruckes in Abhängigkeit von der AGR-Rate und Lambda;
- Figur 5: schematisch eine Verbrennungskraftmaschine und dieser zugeordnete Komponenten und
- Figur 6: ein Ablaufdiagramm des erfindungsgemäßen Verfahrens.

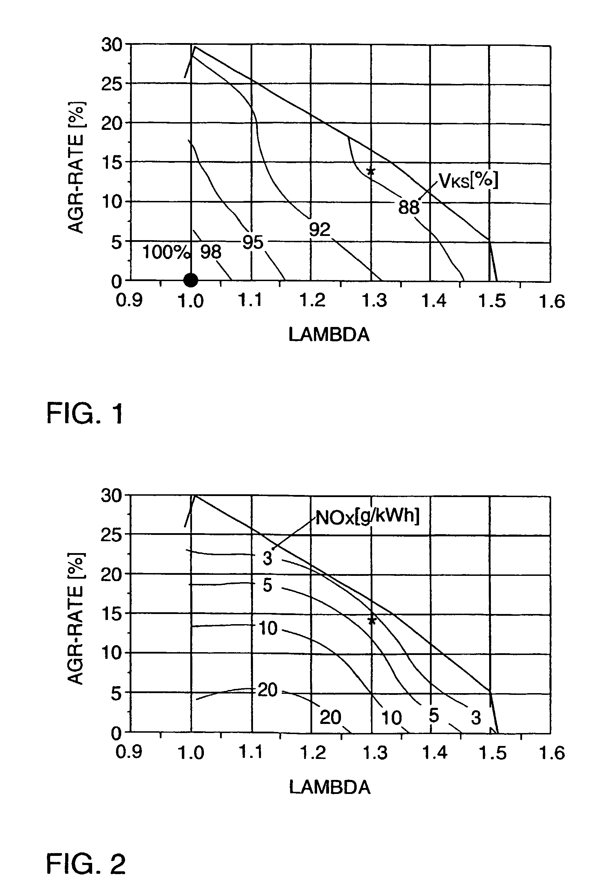

Die Figuren 1 bis 4 zeigen die Abhängigkeit verschiedener Parameter einer magerlauffähigen und schichtbetriebsfähigen Verbrennungskraftmaschine in Abhängigkeit von einer Abgasrückführrate (AGR-Rate) und dem Luft-Kraftstoff-Verhältnis Lambda. Dabei ist durch die fett gezeichnete Linie der Bereich des homogenen Magerbetriebes eingeschlossen. Bei darüber liegenden Lambdawerten und AGR-Raten wird die Verbrennungskraftmaschine im homogenen Schichtbetrieb gefahren.

Figur 1 zeigt Isolinien mit gleichem relativen Kraftstoffverbrauch V_{KS}. Dabei geben die Zahlenwerte der Isolinien den prozentualen Kraftstoffverbrauch, bezogen auf einen Verbrauch bei λ = 1,0 und ohne Abgasrückführung an. Der Bezugspunkt ist ebenfalls eingezeichnet. Es ist erkennbar, dass mit zunehmendem Lambda, das heißt mit magererem Gemisch, und zunehmender AGR-Rate ein Verbrauchsvorteil von bis zu etwa 12 % im homogenen Magerbetrieb erzielbar ist.

Wie aus den Kennlinien mit gleicher NO_{X}-Rohemission in Figur 2 ersichtlich ist, entstehen im mageren Betriebsmodus jedoch aufgrund des Sauerstoffüberschusses hohe NO_{X-}Rohemissionen mit einem Maximum etwas oberhalb von λ = 1,1. Anders als im stöchiometrischen Betrieb bei λ = 1 können diese NO_{X}-Emissionen aufgrund des im Magerbetrieb vorliegenden Sauerstoffüberschusses mit herkömmlichen 3-Wege-Katalysatoren nicht vollständig reduziert werden. Die NO_{X}-Rohemission kann, wie ebenfalls aus Figur 2 hervorgeht, durch Abgasrückführung mit zunehmenden AGR-Raten deutlich gesenkt werden. Es wurde bereits eingangs erläutert, dass eine Messung der AGR-Rate derzeit nicht möglich ist. Daher wird üblicherweise lediglich eine Vorsteuerung der AGR-Rate vorgenommen. Infolgedessen ergeben sich große Fehler bezüglich einer vorgegebenen AGR-Rate. Ausgehend von einem bevorzugten Betriebspunkt mit einer Lambdavorgabe von 1,3 und einer AGR-Vorgabe von 13 % (siehe Markierung in Figur 2) ergibt sich bei einem absoluten Fehler in der AGR-Rate von -5 % bereits eine Erhöhung der NO_{X}-Rohemission von 50 %. Desgleichen können Ungenauigkeiten in der Lambdaregelung zu empfindlichen NO_{X}-Mehremissionen führen.

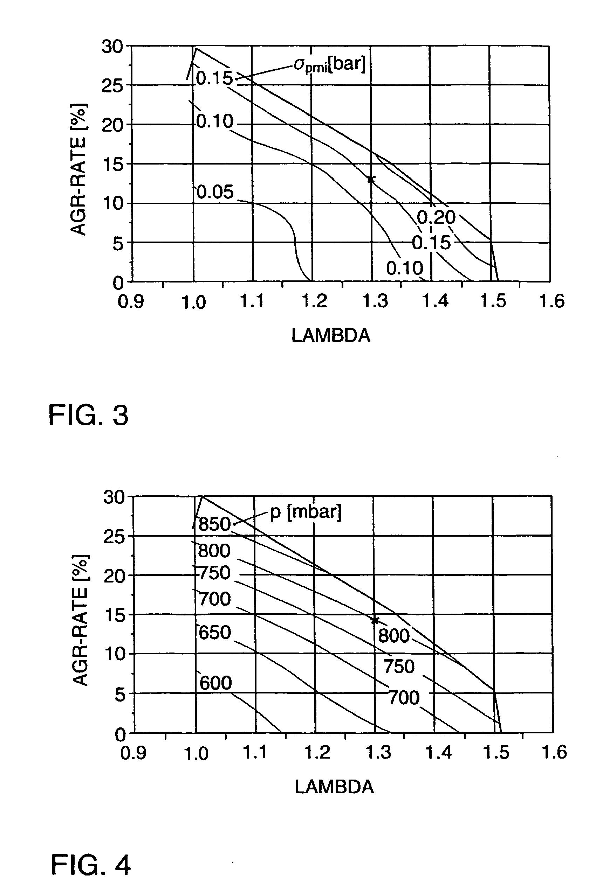

Figur 3 zeigt die Abhängigkeit der Laufruhe σₚₘᵢ, ausgedrückt als Standardabweichung des indizierten Mitteldruckes, im homogenen Magerbetrieb von der AGR-Rate und von Lambda. Anhand der Isolinien wird deutlich, dass sich die Laufruhe σₚₘᵢ mit zunehmender AGR-Rate und zunehmendem Lambda verschlechtert (Zunahme der Zahlenwerte für σₚₘᵢ). Wiederum ausgehend von dem bevorzugten Betriebspunkt bei λ = 1,3 und einer AGR-Rate von 13 % (siehe Markierung) zeigt sich eine unzulässige Verschlechterung der Laufruhe σₚₘᵢ bei einem absoluten Fehler der AGR-Rate von +5 % oder einer Lambdaabweichung von +0,05. Somit wirken sich Ungenauigkeiten in der Einstellung der AGR-Rate oder des Luft-Kraftstoff-Verhältnisses sehr empfindlich sowohl auf die NOₓ-Rohemission als auch auf die Laufruhe der Verbrennungskraftmaschine aus.

Das Problem der unerwünschten Schwankungen der NOₓ-Emission sowie der Laufruhe bei ungenauer Einstellung der AGR-Rate oder des Luft-Kraftstoff-Verhältnisses wird durch die vorliegende Erfindung überwunden. Die der Erfindung zugrunde liegende Beobachtung wird anhand von Figur 4 deutlich, welche die Isolinien des Saugrohrdruckes p darstellt. Hier fällt auf, dass die Linien mit konstantem Saugrohrdruck hinsichtlich ihres prinzipiellen Verlaufs weitgehend den Isolinien der NOₓ-Emission (Figur 2) und der Laufruhe σₚₘᵢ (Figur 3) entsprechen. Erfindungsgemäß wird daher die AGR-Rate und/oder das Luft-Kraftstoff-Verhältnis dahingehend geregelt, dass sich ein vorgegebener Saugrohrdruck p einstellt, der somit die eigentliche Regelgröße darstellt. Wird beispielsweise der Saugrohrdruck p auf eine Sollvorgabe von 800 mbar eingeregelt, bleibt ein absoluter Fehler in der AGR-Rate von ± 5 % und auch ein Fehler im Luft-Kraftstoff-Verhältnis von ± 0,05 nahezu ohne Auswirkung auf die NOₓ-Rohemission und Laufruhe. Dabei ist besonders wichtig festzustellen, dass sich der Saugrohrdruck p mit Hilfe verfügbarer Drucksensoren sehr genau einregeln lässt.

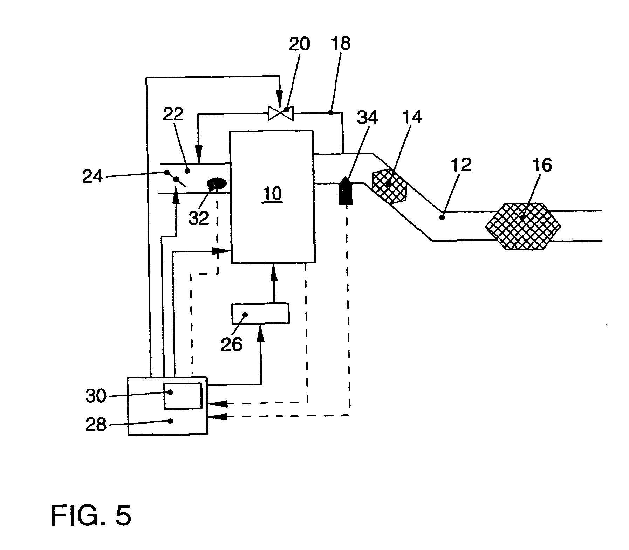

In Figur 5 ist in schematischer Darstellung ein prinzipieller Aufbau einer Verbrennungskraftmaschine 10 und dieser zugeordneter erfindungsrelevanter Komponenten gezeigt. Ein von der Verbrennungskraftmaschine 10 kommendes Abgas wird durch einen Abgaskanal 12 und durch ein hierin angeordnetes Katalysatorsystem 14, 16 geleitet. Das Katalysatorsystem umfasst typischerweise einen kleinvolumigen, motornah angeordneten Vorkatalysator 14, beispielsweise einen 3-Wege-Katalysator, sowie einen großvolumigen, an einer Unterbodenposition angeordneten Hauptkatalysator 16. Insbesondere bei einer magerlauffähigen Verbrennungskraftmaschine 10 ist der Hauptkatalysator 16 vorzugsweise ein NOₓ-Speicherkatalysator. Dieser ist in mageren Betriebsphasen der Verbrennungskraftmaschine 10 in der Lage, dreiwegekatalytisch nicht vollständig konvertierbare Stickoxide NOₓ einzulagern und diese in kurzen zwischengeschalteten fetten Regenerationsphasen mit λ < 1 mittels der im fetten Abgas im Überschuss vorhandenen Reduktionsmittel HC und CO zu reduzieren und freizusetzen. Da durch diese Regenerationsphasen ein durch den mageren Betriebsmodus der Verbrennungskraftmaschine 10 erzielter Verbrauchsvorteil teilweise wieder aufgezehrt wird, werden möglichst große Regenerationsintervalle angestrebt. Dies wird durch eine Abgasrückführung erreicht, die eine Verbrennungstemperatur, und damit die NOₓ-Rohemission, absenkt. Hierfür wird mittels einer Abgasrückführleitung 18 ein mittels eines Stellmittels 20 regulierbarer Anteil des Abgases dem Abgaskanal 12 entnommen und in ein Saugrohr 22, welches der Verbrennungskraftmaschine 10 Frischluft zuführt, eingespeist. Das, die Abgasrückführrate (AGR-Rate) regulierende Stellmittel 20 ist üblicherweise ein Abgasrückführventil. Der der Verbrennungskraftmaschine 10 zuzuführende Frischluftmassenstrom wird über die Stellung einer im Saugrohr 22 angeordneten Drosselklappe 24 gesteuert. Eine Zuführung von Kraftstoff erfolgt über eine Kraftstoffzumesseinrichtung 26, etwa einer Direkt- oder Saugrohreinspritzung oder einem Vergaser. Vorzugsweise handelt es sich hier um ein Direkteinspritzsystem, welches einen Magerbetrieb der Verbrennungskraftmaschine 10 sowohl im Schichtbetrieb als auch -im Bereich höherer Motorlasten und/oder höherer Drehzahlen - im Homogenbetrieb ermöglicht. Die Steuerung der Kraftstoffzufuhr, der AGR-Rate sowie der Luftzufuhr erfolgt durch ein Motorsteuergerät 28, in welches eine Steuereinheit 30 integriert ist, in der ein Algorithmus zur erfindungsgemäßen Regelung der Abgasrückführrate und/oder des Luft-KraftstoffGemisches hinterlegt ist. Wie bereits erläutert, erfolgt dabei die Regelung dieser Größen derart, dass ein konstanter vorgegebener Saugrohrdruck eingeregelt wird. Zur Erfassung des Saugrohrdruckes ist ein Drucksensor 32 in dem Saugrohr 22 angeordnet, der ein vom Saugrohrdruck abhängiges Signal an das Motorsteuergerät 28 übermittelt. Ferner kann im Abgaskanal 12 optional eine Lambdasonde 34 angeordnet sein, die ein von einer Sauerstoffkonzentration im Abgas abhängiges Signal bereitstellt. Im Gegensatz zu konventionellen Verfahren stellt der von der Lambdasonde 34 ermittelte Lambdawert jedoch nicht die primär einzuregelnde Größe dar, sondern hat lediglich überwachenden Charakter. Weitere Betriebsparameter der Verbrennungskraftmaschine 10 finden ebenfalls Eingang in das Motorsteuergerät 28.

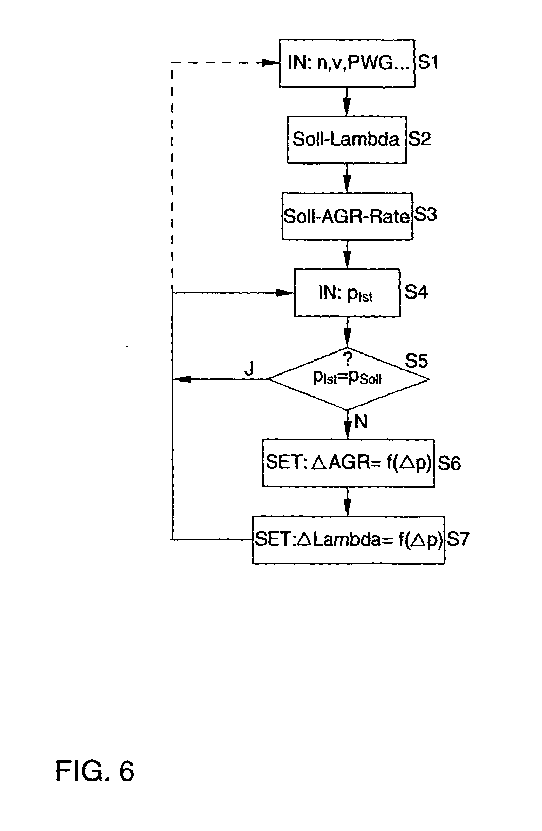

Einen prinzipiellen Ablauf des erfindungsgemäßen Verfahrens zeigt Figur 6. Das Verfahren wird im Schritt S1 initialisiert, in dem verschiedene Betriebsparameter, wie etwa eine Motorlast, eine Motordrehzahl n, eine Fahrzeuggeschwindigkeit v und/oder ein einem Fahrwunsch entsprechendes Pedalwertgebersignal PWG-Signal, eingelesen werden. Anschließend erfolgt im Schritt S2 eine Vorsteuerung einer Vorgabe für das Luft-Kraftstoff-Verhältnis (Soll-Lambda), wobei das Soll-Lambda in Abhängigkeit von dem im Schritt S1 ermittelten Betriebspunkt der Verbrennungskraftmaschine 10 ermittelt wird. Die Lambdavorsteuerung kann beispielsweise erfolgen, indem das Motorsteuergerät 28 in Abhängigkeit von dem Pedalwertgeber PWG oder der Motorlast die Stellung der Drosselklappe 24 vorgibt. Abhängig von dem somit eingestellten Frischluftmassenstrom und dem vom Fahrer gewünschten, aus dem PWG-Signal ermittelten Drehmoment berechnet das Motorsteuergerät 28 eine für die Lambdavorgabe beziehungsweise die Motorlast erforderliche Kraftstoffmenge und steuert entsprechend die Kraftstoffzumesseinrichtung 26 an. Dabei greift das Motorsteuergerät 28 auf Kennfelder zurück, welche eine Stellgröße der Kraftstoffzumesseinrichtung, beispielsweise eine Öffnungszeit von Einspritzventilen, mit der zugeführten Kraftstoffmenge korrelieren.

Im anschließenden Schritt S3 wird in analoger Weise eine Vorsteuerung einer Soll-Abgasrückführrate (Soll-AGR-Rate) durchgeführt, die ebenfalls in Abhängigkeit des ermittelten Betriebspunktes vorgegeben wird. Die Vorsteuerung der AGR-Rate erfolgt wiederum anhand von Kennfeldern, welche beispielsweise eine Öffnung des AGR-Ventils 20 mit der AGR-Rate korrelieren. Entsprechend der so ermittelten Stellgröße steuert das Motorsteuergerät 28 das in der Abgasrückführleitung 18 angeordnete Abgasrückführventil 20 an.

Eine Feinregelung der AGR-Rate und des Luft-Kraftstoff-Verhältnisses erfolgt in den anschließenden Schritten S4 bis S7 derart, dass der in dem Saugrohr 22 vorliegende Saugrohrdruck p_{Ist} einer Sollvorgabe p_{Soll} angeglichen wird. Hierfür wird zunächst im Schritt S4 der aktuelle Ist-Saugrohrdruck p_{Ist} mittels des Drucksensors 32 ermittelt. In der anschließenden Abfrage S5 wird überprüft, ob der gemessene Ist-Saugrohrdruck p_{Ist} mit dem Soll-Saugrohrdruck p_{Soll} übereinstimmt. Wird dies bejaht, so ist keine weitere Anpassung der AGR-Rate oder des Luft-Kraftstoff-Verhältnisses notwendig und das Verfahren geht im nichtdynamischen Betrieb zum Schritt S4 zurück. Im dynamischen Betrieb hingegen muss der neue Betriebspunkt der Verbrennungskraftmaschine 10 durch Einlesen der Betriebsparameter neu ermittelt werden, so dass das Verfahren zum Schritt S1 zurückgeht und gegebenenfalls in S2 und S3 eine erneute Vorsteuerung des Luft-Kraftstoff-Verhältnisses und der AGR-Rate durchgeführt wird (unterbrochene Linie). Wird auf der anderen Seite in der im Schritt S5 erfolgenden Abfrage eine Abweichung Δp zwischen Ist- und Soll-Saugrohrdruck festgestellt, erfolgt im Schritt S6 eine Anpassung der AGR-Rate, indem diese um die Größe ΔAGR, die eine Funktion der Abweichung Δp ist, verändert wird. Entsprechend erfolgt im Schritt S7 eine Anpassung des Luft-Kraftstoff-Verhältnisses Lambda. Da das Luft-Kraftstoff-Verhältnis seinerseits von der AGR-Rate abhängt, kann eine zusätzliche Kontrolle über das mit der Lambdasonde 34 ermittelte Abgaslambda sinnvoll sein.

### BEZUGSZEICHENLISTE

- 10: Verbrennungskraftmaschine
- 12: Abgaskanal
- 14: Vorkatalysator
- 16: Hauptkatalysator / NOₓ-Speicherkatalysator
- 18: Abgasrückführleitung
- 20: Stellmittel / Abgasrückführventil
- 22: Saugrohr
- 24: Frischluftdosiereinrichtung / Drosselklappe
- 26: Kraftstoffzumesseinrichtung
- 28: Motorsteuergerät
- 30: Steuereinheit
- 32: Drucksensor
- 34: Lambdasonde

- AGR: Abgasrückführung
- n: Motordrehzahl
- p: Saugrohrdruck
- p_{Ist}: Ist-Saugrohrdruck
- p_{Soll}: Soll-Saugrohrdruck
- PWG: Pedalwertgeber
- σₚₘᵢ: Laufruhe
- v: Fahrzeuggeschwindigkeit
- V_{KS}: relativer Kraftstoffverbrauch

## Patentansprüche

1. Verfahren zur Regelung einer externen Abgasrückführrate (AGR-Rate) einer magerlauffähigen Verbrennungskraftmaschine (10), **dadurch gekennzeichnet, dass** die Abgasrückführrate (AGR-Rate) in Anhängigkeit eines in einem Saugrohr (22) der Verbrennungskraftmaschine (10) stromab einer Frischluftdosiereinrichtung (24) erfassten Ist-Saugrohrdruckes (P_{Ist}) derart angepasst wird, dass der sich in dem Saugrohr (22) einstellende Ist-Saugrohrdruck (P_{Ist}) einem vorgegebenen Soll-Saugrohrdruck (P_{Soll}) angeglichen wird.

2. Verfahren nach Anspruch 1, **dadurch gekennzeichnet, dass** die Anpassung der Abgasrückführrate (AGR-Rate) durch Ansteuerung eines in einer Abgasrückführleitung (18) angeordneten Stellmittels (20) erfolgt.

3. Verfahren nach Anspruch 1 oder 2, **dadurch gekennzeichnet, dass** eine Vorsteuerung einer Soll-Abgasrückführrate (Soll-AGR-Rate) anhand von Kennfeldern erfolgt, welche eine Stellgröße des Stellmittels (20) mit der Abgasrückführrate (AGR-Rate) korrelieren.

4. Verfahren nach Anspruch 2 oder 3, **dadurch gekennzeichnet, dass** das Stellmittel (20) ein Abgasrückführventil ist.

5. Verfahren nach einem der vorhergehenden Ansprüche, **dadurch gekennzeichnet, dass** zusätzlich zur AGR-Rate ein der Verbrennungskraftmaschine zugeführtes Luft-Kraftstoff-Verhältnisses (Lambda) in Anhängigkeit des im Saugrohr (22) erfassten Ist-Saugrohrdruckes (p_{Ist}) derart angepasst wird, dass der sich in dem Saugrohr (22) einstellende Ist-Saugrohrdruck (p_{Ist}) dem vorgegebenen Soll-Saugrohrdruck (p_{Soll}) angeglichen wird.

6. Verfahren nach Anspruch 5, **dadurch gekennzeichnet, dass** die Anpassung des Luft-Kraftstoff-Verhältnisses (Lambda) durch Ansteuerung einer Kraftstoffzumesseinrichtung (26) und/oder einer Frischluftdosiereinrichtung (24) erfolgt.

7. Verfahren nach einem der Ansprüche 5 oder 6, **dadurch gekennzeichnet, dass** eine Vorsteuerung eines Soll-Luft-Kraftstoff-Verhältnisses (Soll-Lambda) anhand von Kennfeldern erfolgt, welche eine Stellgröße der Kraftstoffzumesseinrichtung (26) und/oder der Frischluftdosiereinrichtung (24) mit der zugeführten Kraftstoffmenge beziehungsweise der Frischluftmenge korrelieren.

8. Verfahren nach einem der vorhergehenden Ansprüche, **dadurch gekennzeichnet, dass** der Soll-Saugrohrdruck (p_{Soll}), die Soll-Abgasrückführrate (Soll-AGR-Rate) und/oder das Soll-Luft-Kraftstoff-Verhältnis (Soll-Lambda) in Abhängigkeit von aktuellen Betriebsparametern der Verbrennungskraftmaschine (10) vorgegeben werden.

9. Verfahren nach Anspruch 8, **dadurch gekennzeichnet, dass** die Betriebsparameter eine Motorlast, eine Drehzahl, einen Pedalwertgeber und/oder eine Drosselklappenstellung umfassen.

10. Verfahren nach einem der vorhergehenden Ansprüche, **dadurch gekennzeichnet, dass** der Ist-Saugrohrdruck (P_{Ist}) mittels eines in dem Saugrohr (22) angeordneten Drucksensors (32) erfasst wird.

11. Verfahren nach einem der vorhergehenden Ansprüche, **dadurch gekennzeichnet, dass** eine Überwachung des Luft-Kraftstoff-Verhältnisses (Lambda) in Abhängigkeit eines von einem in einem Abgaskanal (12) angeordneten Gassensor (34) bereitgestellten Signals erfolgt.

12. Vorrichtung zur Regelung einer externen Abgasrückführrate (AGR-Rate) einer magerlauffähigen Verbrennungskraftmaschine (10), **gekennzeichnet durch** eine in einem Saugrohr (22) der Verbrennungskraftmaschine (10) angeordnete Druckmesseinrichtung (32) zur Erfassung eines Ist-Saugrohrdruckes (p_{Ist}) stromab einer Frischluft dosiereinrichtung und Mittel, mit denen die Abgasrückführrate (AGR-Rate) in Anhängigkeit des erfassten Ist-Saugrohrdruckes (p_{Ist}) derart anpassbar ist, dass der sich in dem Saugrohr (22) einstellende Ist-Saugrohrdruck (p_{Ist}) sich einem vorgegebenen Soll-Saurohrdruck (p_{Soll}) angleicht.

13. Vorrichtung nach Anspruch 12, **dadurch gekennzeichnet, dass** die Mittel eine Steuereinheit (30) umfassen, in der ein Algorithmus zur Regelung der Abgasrückführrate (AGR-Rate) in digitaler Form hinterlegt ist.

14. Vorrichtung nach Anspruch 13, **dadurch gekennzeichnet, dass** die Steuereinheit (30) in ein Motorsteuergerät (28) integriert ist.

15. Vorrichtung nach einem der Ansprüche 12 bis 14, **dadurch gekennzeichnet, dass** die Druckmesseinrichtung (32) ein Drucksensor ist.

16. Vorrichtung nach einem der Ansprüche 12 bis 15, **dadurch gekennzeichnet, dass** die Verbrennungskraftmaschine (10) ein magerlauffähiger, schichtbetriebsfähiger Ottomotor ist.

## Claims

1. Method for regulating an external exhaust gas recirculation rate (AGR rate) of an internal combustion engine (10) which is capable of running in lean-burn mode, **characterized in that** the exhaust gas recirculation rate (AGR rate) is adapted, as a function of an actual induction pipe pressure (p_{Ist}) recorded in an induction pipe (22) of the internal combustion engine (10) downstream of a fresh air metering device (24), in such a manner that the actual induction pipe pressure (p_{Ist}) which adjusts itself in the induction pipe (22) is matched to a predetermined desired induction pipe pressure (p_{Soll}).

2. Method according to Claim 1, **characterized in that** the adapting of the exhaust gas recirculation rate (AGR rate) is effected by actuating a control means (20) arranged in an exhaust gas recirculation line (18).

3. Method according to Claim 1 or 2, **characterized in that** pilot control of a desired exhaust gas recirculation rate (desired AGR rate) is effected on the basis of engine maps which correlate a control variable of the control means (20) with the exhaust gas recirculation rate (AGR rate).

4. Method according to Claim 2 or 3, **characterized in that** the control means (20) is an exhaust gas recirculation valve.

5. Method according to one of the preceding claims, **characterized in that** in addition to the AGR rate, an air/fuel ratio (lambda) fed to the internal combustion engine is adapted as a function of the actual induction pipe pressure (p_{Ist}) recorded in the induction pipe (22) in such a manner that the actual induction pipe pressure (p_{Ist}) which adjusts itself in the induction pipe (22) is matched to the predetermined desired induction pipe pressure (p_{Soll}).

6. Method according to Claim 5, **characterized in that** the adapting of the air/fuel ratio (lambda) is effected by actuating a fuel addition device (26) and/or a fresh air metering device (24).

7. Method according to either of Claims 5 and 6, **characterized in that** pilot control of a desired air/fuel ratio (desired lambda) is effected on the basis of engine maps which correlate a control variable of the fuel addition device (26) and/or of the fresh air metering device (24) with the quantity of fresh air or the quantity of fuel supplied.

8. Method according to one of the preceding claims, **characterized in that** the desired induction pipe pressure (p_{Soll}), the desired exhaust gas recirculation rate (desired AGR rate) and/or the desired air/fuel ratio (desired lambda) are predetermined as a function of current operating parameters of the internal combustion engine (10).

9. Method according to Claim 8, **characterized in that** the operating parameters comprise an engine load, an engine speed, a pedal transducer and/or a throttle valve position.

10. Method according to one of the preceding claims, **characterized in that** the actual induction pipe pressure (p_{Ist}) is recorded by means of a pressure sensor (32) arranged in the induction pipe (22).

11. Method according to one of the preceding claims, **characterized in that** the air/fuel ratio (lambda) is monitored as a function of a signal provided by a gas sensor (34) arranged in an exhaust pipe (12).

12. Apparatus for regulating an external exhaust gas recirculation rate (AGR rate) of an internal combustion engine (10) which is capable of running in lean-burn mode, **characterized by** a pressure measuring device (32) arranged in an induction pipe (22) of the internal combustion engine (10) for recording an actual induction pipe pressure (p_{Ist}) downstream of a fresh air metering device and by means which can be used to adapt the exhaust gas recirculation rate (AGR rate), as a function of the recorded actual induction pipe pressure (p_{Ist}), in such a manner that the actual induction pipe pressure (p_{Ist}) which adjusts itself in the induction pipe (22) is matched to a predetermined desired induction pipe pressure (p_{Soll}).

13. Apparatus according to Claim 12, **characterized in that** the means comprise a control unit (30), in which an algorithm for regulating the exhaust gas recirculation rate (AGR rate) is stored in digital form.

14. Apparatus according to Claim 13, **characterized in that** the control unit (30) is integrated in an engine control unit (28).

15. Apparatus according to one of claims 12 to 14, **characterized in that** the pressure measuring device (32) is a pressure sensor.

16. Apparatus according to one of claims 12 to 15, **characterized in that** the internal combustion engine (10) is a spark-ignition engine which is capable of running in lean-burn mode and is capable of stratified-charge operation.

## Revendications

1. Procédé pour régler le débit extérieur de gaz d'échappement recirculé (débit AGR) d'un moteur à combustion interne (10) fonctionnant en régime pauvre, **caractérisé en ce que** le débit de gaz d'échappement recirculé (débit AGR) est adapté en fonction d'une pression réelle dans le tube d'admission (pᵢₛₜ) détectée en aval d'un dispositif de dosage d'air frais (24) dans un tube d'admission (22) du moteur à combustion interne (10), de telle sorte que la pression réelle dans le tube d'admission (Pᵢₛₜ) s'ajustant dans le tube d'admission (22) soit alignée avec une pression de consigne prédéterminée (pₛₒₗₗ) dans le tube d'admission.

2. Procédé selon la revendication 1, **caractérisé en ce que** l'adaptation du débit de gaz d'échappement recirculé (débit AGR) a lieu par commande d'un moyen de réglage (20) dans la conduite de gaz d'échappement recirculé (18).

3. Procédé selon la revendication 1 ou 2, **caractérisé en ce qu'**une précommande d'un débit de consigne de gaz d'échappement recirculé (débit AGR de consigne) a lieu à l'aide de champs caractéristiques qui effectuent une corrélation d'une valeur de réglage du moyen de commande (20) au débit de gaz d'échappement recirculé (débit AGR).

4. Procédé selon la revendication 2 ou 3, **caractérisé en ce que** le moyen de commande (20) est une soupape de recirculation des gaz d'échappement.

5. Procédé selon l'une quelconque des revendications précédentes, **caractérisé en ce qu'**en plus du débit AGR, un rapport air-carburant (lambda) acheminé au moteur à combustion interne est adapté en fonction de la pression réelle dans le tube d'admission (pᵢₛₜ) détectée dans le tube d'admission (22) de telle sorte que la pression réelle dans le tube d'admission (pᵢₛₜ) s'ajustant dans le tube d'admission (22) soit alignée avec la pression de consigne prédéterminée (pₛₒₗₗ) dans le tube d'admission.

6. Procédé selon la revendication 5, **caractérisé en ce que** l'adaptation du rapport air-carburant (lambda) s'effectue par commande d'un dispositif d'apport de carburant (26) et/ou d'un dispositif de dosage d'air frais (24).

7. Procédé selon l'une quelconque des revendications 5 ou 6, **caractérisé en ce qu'**une précommande d'un rapport air-carburant de consigne (lambda de consigne) s'effectue au moyen de champs caractéristiques qui effectuent une corrélation d'une valeur de réglage du dispositif d'apport de carburant (26) et/ou du dispositif de dosage d'air frais (24) avec la quantité de carburant apportée et/ou avec la quantité d'air frais.

8. Procédé selon l'une quelconque des revendications précédentes, **caractérisé en ce que** la pression de consigne (pₛₒₗₗ) du tube d'admission, le débit de consigne de gaz d'échappement recirculé (débit AGR de consigne) et/ou le rapport air-carburant de consigne (lambda de consigne) sont prédéfinis en fonction de paramètres de fonctionnement actuels du moteur à combustion interne (10).

9. Procédé selon la revendication 8, **caractérisé en ce que** les paramètres de fonctionnement incluent une charge du moteur, un régime du moteur, un capteur de valeur de pédale et/ou une position de papillon.

10. Procédé selon l'une quelconque des revendications précédentes, **caractérisé en ce que** la pression réelle dans le tube d'admission (pᵢₛₜ) est déterminée au moyen d'un capteur de pression (32) disposé dans le tube d'admission (22).

11. Procédé selon l'une quelconque des revendications précédentes, **caractérisé en ce qu'**une surveillance du rapport air-carburant (lambda) en fonction d'un signal fourni par un capteur de gaz (34) disposé dans un conduit de gaz d'échappement (12) est effectuée.

12. Dispositif pour régler le débit extérieur de gaz d'échappement recirculé (débit AGR) d'un moteur à combustion interne (10) fonctionnant en régime pauvre, **caractérisé par** un dispositif de mesure de pression (32) disposé dans un tube d'admission (22) du moteur à combustion interne (10) pour détecter une pression réelle dans le tube d'admission (pᵢₛₜ) en aval d'un dispositif de dosage d'air frais et des moyens, avec lesquels le débit de gaz d'échappement recirculé (débit AGR) peut être adapté en fonction de la pression réelle détectée dans le tube d'admission (pᵢₛₜ) de telle sorte que la pression réelle dans le tube d'admission (pᵢₛₜ) s'ajustant dans le tube d'admission (22) soit alignée avec une pression de consigne prédéterminée (pₛₒₗₗ) dans le tube d'admission.

13. Dispositif selon la revendication 12, **caractérisé en ce que** les moyens incluent une unité de commande (30), dans laquelle est consigné sous forme numérique un algorithme de réglage du débit de gaz d'échappement recirculé (débit AGR).

14. Dispositif selon la revendication 13, **caractérisé en ce que** l'unité de commande (30) est intégrée dans un appareil de commande du moteur (28).

15. Dispositif selon l'une quelconque des revendications 12 à 14, **caractérisé en ce que** le dispositif de mesure de pression (32) est un capteur de pression.

16. Dispositif selon l'une quelconque des revendications 12 à 15, **caractérisé en ce que** le moteur à combustion interne (10) est un moteur à allumage par étincelle capable d'un fonctionnement stratifié, pouvant fonctionner en mélange pauvre.
